# EUROPEAN PATENT SPECIFICATION

(11) **EP 3 644 703 B1**
(45) Date of publication and mention of the grant of the patent: **03.08.2022**
(21) Application number: 18739579.3
(22) Date of filing: 26.06.2018
(51) Int. Cl.: A01B 45/02

(54) **APPARATUS, EQUIPMENT AND METHOD FOR TURF TREATMENT**
VORRICHTUNG, GERÄT UND VERFAHREN ZUR RASENBEHANDLUNG
APPAREIL, ÉQUIPEMENT ET PROCÉDÉ DE TRAITEMENT DE GAZON

(30) Priority: 28.06.2017 GB 201710318
(43) Date of publication of application: 06.05.2020
(73) Proprietor: Richard Campey Limited, Macclesfield Cheshire SK11 9HG (GB)
(72) Inventor: CAMPEY, Richard John, Macclesfield Cheshire SK11 9HG (GB)
(74) Representative: TLIP Limited
(86) International application number: PCT/GB2018/051776
(87) International publication number: WO 2019/002840

(56) References cited:
- DE-U1- 8 811 612
- US-A- 3 739 856
- US-A- 5 842 747
- US-A1- 2014 174 771
- US-A1- 2014 338 301

## Description

The present invention relates to an apparatus, equipment and method for turf treatment, and more particularly, but not exclusively, for treatment of sports playing surfaces such as football, rugby and hockey pitches, and tennis courts which, during the course of a playing season, are subject to wear and tear and also suffer from a build-up of 'thatch', which is an accumulation of layers of, for example, dead grass, partially decomposed leaves, stems and/or roots.

Diseases and other blights including algae, moss, fungi, and slime mould can invade the turf, and may be made worse by the presence of thatch. It is usually recommended that thatch be treated by mechanical thatching equipment, an operation usually referred to as scarification.

It is recommended to carry out scarification in several treatments rather than attempting to remove all the thatch at once, but this is essentially because conventional scarifiers remove thatch in thin furrows, leaving 'ridges' of thatch between them, and so cannot remove all the thatch in one pass.

DE8811612 discloses a scarifying roller having "knife-disks" arranged about a rotor, where adjacent knives are offset from one another by a small circumferential angle.

US3739856 discloses an aerator type attachment structure which may be connected to a power means such as a garden tractor having a pair of aerator assemblies rotatable on contact with the area being worked

US2014174771 discloses a gimbal for attaching an implement to a three-point hitch.

US5842747 discloses an apparatus for a roadway surface reclaiming drum that includes a plurality of flighting sections generally helically attached to a cylindrical surface of the drum.

US6094860 discloses the use of artificial fibre reinforcement for grass turf areas in playing fields subject to heavy wear, and other patents and proprietary systems such as "SISGrass^{®}" and Desso^{®} Grassmaster similarly involve the use of artificial fibre reinforcement.

Desso^{®} Grassmaster is a turf reinforcement system in which artificial grass fibres are injected some 20cm deep into a grass surface, projecting some 25mm above the soil. The maintenance of this system, as regards mowing, verticutting and ventilating, is said to be no different from the maintenance of ordinary turf. Mowing, of course, must be carried out with the cutter height at or above the height of the artificial grass fibres, e.g. at 26mm or more if the fibre height is 25mm, otherwise the artificial grass fibres would be cut or pulled out.

The artificial grass fibres are injected into a matrix of sand, which of course has no nutritional value, and there is only a thin top layer of humus, if indeed any, so the natural grass needs to be treated with fertiliser more than it would if grown in deep soil. This exacerbates problems of disease and infestation, bearing in mind that about 97% of the turf is natural grass. The sand also, over the course of a playing season, compacts more than does the usual substrate of natural, non-reinforced turf.

Moreover, undesired grasses and weeds such as clover can be a problem on any turf. Clover is especially problematic on playing surfaces such as tennis courts, as it tends to be slippery. Weeds are usually treated with systemic herbicides, which take time to act and which may require several treatments over a space of weeks.

The present invention provides an improved apparatus for treating turf, including artificial grass-reinforced turf planted in a matrix of, for example, sand and/or soil, that is capable of removing thatch, diseased or blighted humus and sand, even all of the grass and weeds, and without affecting artificial grass reinforcement, if present.

In a first aspect there is provided a turf treatment apparatus in accordance with claim 1.

Such a configuration reduces the witness lines in comparison to rotors having helical track(s) extending in only one direction.

The teeth may be individually attached to the respective helical tracks so as to be capable of individual removal for replacement or refurbishing or for reconfiguring the rotor.

The teeth may be bolted on to the helical tracks, and may be attached by a single bolt, the helical tracks having recesses or so arranged in relation to define a recess into which the teeth fit so as to be held securely in position by a single bolt.

The helical tracks may be welded to the surface of the rotor or fixed in slots, which may be laser-cut, in the rotor. The teeth may have tips extending at least 60mm above the cylindrical surface of the rotor.

The tips may extend up to 200mm above the cylindrical surface of the rotor. The teeth may be of wear resistant material or at least tipped with wear resistant material such as tungsten carbide at a tip portion thereof.

The teeth may extend on one or more helical tracks in each helical track portion, and there are, preferably four helical tracks per helical track portion.

With teeth closely spaced along each of the helical tracks, and set to an appropriate depth of penetration of the teeth, the rotor will be capable of removing in one pass all or substantially all thatch, grass and infected humus and/or sand.

In a second aspect there, is provided turf treatment equipment in accordance with claim 8

In a third aspect, there is provided a method for the treatment of turf comprising grass growing in a matrix in accordance with claim 11.

An apparatus, equipment and method according to the present invention will now be described with reference to the accompanying drawings, in which:
Figure 1a is an illustrative example of a cross section of turf;
Figure 1b is a cross section of turf similar to that of Figure 1a reinforced with artificial grass fibres;
Figure 1c is an illustrative example of a cross section of stoloniferous, warm season turf reinforced with artificial grass fibres;
Figure 2 is a front view of one embodiment of an apparatus comprising a rotor;
Figure 3 is a perspective view of the rotor of Figure 2;
Figure 4a is an enlarged perspective view of an end of the rotor of Figure 2;
Figure 4b is an end view of the rotor of Figure 2;
Figure 5 is a view of a single tooth for use in the apparatus of Figure 2; and
Figure 6 illustratively shows a rear view of an apparatus of Figure 2 in use.

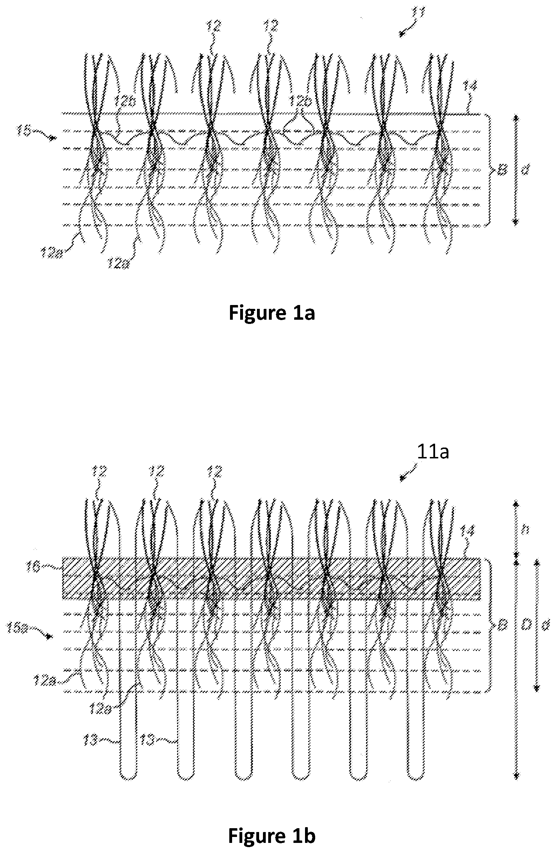

Figure 1a is an illustrative example of a cross-section of turf 11 wherein natural grass 12 is, sown, for example, in sports surfaces such as tennis courts and football and rugby pitches, in a matrix 15 of, for example, soil, sand, silt and/or clay. The grass roots 12a may be connected by rhizomes 12b. Over time and as a result of mowing and wear, the turf acquires an accumulation thatch (not shown), and can also become infested with algae, moss, fungi, slime mould and other problems.

Figure 1b is an illustrative example of a cross section of turf 11a similar to that shown in Figure 1a, which is reinforced with artificial grass fibres 13 which extend a given height h above turf level 14, e.g. 25mm. The natural grass 12 is usually sown in a matrix 15a of, for example, sand with just a thin upper layer 16 of, for example, humus. Such reinforced turf can be more at risk of infestation through needing to be more heavily fertilised.

The artificial grass fibres 13 are injected a depth D, usually some 20 cm deep, through the humus 16 into the matrix 15a.

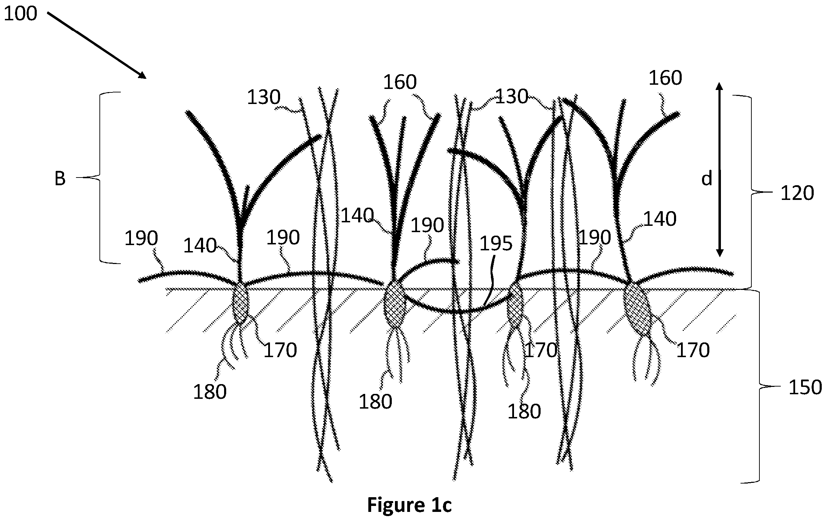

Figure 1c is an illustrative example of a cross section of stoloniferous, warm season turf 100, having an upper layer of turf 120 growing in a matrix 150 of, for example, soil and/or sand, comprising stalks 140 and blades 160 of warm season grass growing from crowns 170 and roots 180. Such warm season grass includes Bermudagrass and Buffalo grass.

The warm season grass also comprises stolons 190 which spread out from the crowns 170 so as to interconnect the crowns 170 above the top level of the matrix 150, whilst the rhizomes 195 spread out from the crowns 170 below the top level of the matrix 150.

In Figure 1c, the warm season turf is reinforced with artificial grass fibres 130 as described in Figure 1b above. The warm season turf may be treated by removing the upper layer of turf 120 so as to remove material including the stalks 140, blades 160 and any thatch etc. which may build up in the upper layer 120, but not removing the stolons 190 or the artificial grass fibres 130. The warm season grass can then regenerate from the stolons 190.

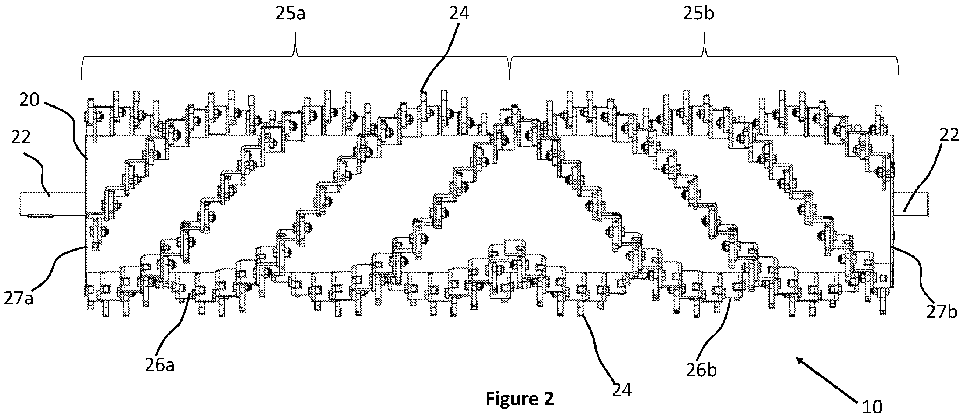

An illustrative example of an infected layer is depicted in Figures 1a-1c by the respective brackets (B), whilst Figures 2-4b illustrate an apparatus 10 for treating turf 11, 11a, 100.

The apparatus 10 for treating turf and warm season turf comprises a cylindrical rotor 20 adapted to be driven in rotation about a horizontal axis, shown as axle 22, whereby two or more helical track portions 25a/25b on the rotor 20 each comprise one or more helical tracks 26a/26b.

The rotor 20 may be any length depending on the application, but is preferably between 0.5m to 3m in length, and preferably between 0.5m and 2.5m.

In the present illustrative example, the rotor 20 comprises two helical track portions 25a & 25b, whereby first helical track portion 25a comprises four equally spaced helical tracks 26a, extending from a first end 27a of the rotor 20 towards a central portion of the rotor 20, whilst second helical track portion 25b comprises four equally spaced helical tracks 26b, extending from a second end 27b of the rotor 20, towards a central portion of the rotor 20.

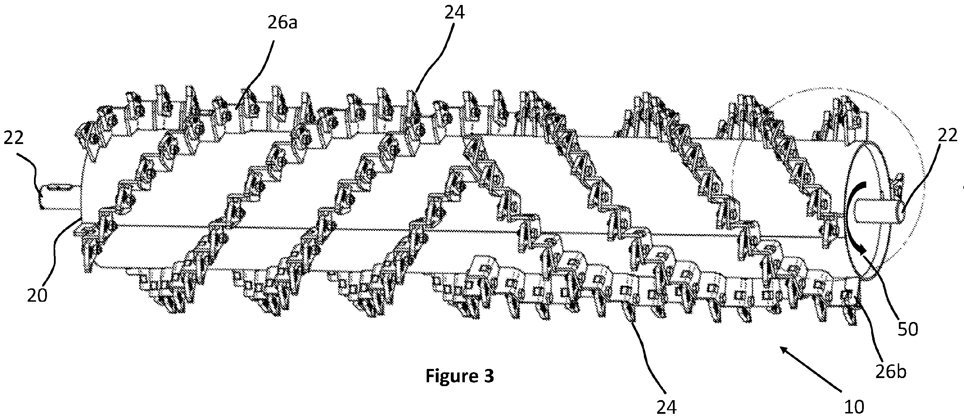

As illustratively shown in Figures 2 & 3, the helical tracks 26a of the first helical track portion 25a extend along the surface of the rotor 20 in an anticlockwise direction about the horizontal axis from the first end 27a towards the central portion of the rotor 20, when viewed along the horizontal axis 22 from a first end 27a towards a second end 27b.

As illustratively shown in Figures 2-4b, the helical tracks 26b of the second helical track portion 25b extend along the surface of the rotor 20 in a clockwise direction about the horizontal axis from the second end 27b towards the central portion of the rotor 20, when viewed along the horizontal axis 22 from the second end 27b towards the first end 27a.

It will be appreciated that the term "central portion" is used for illustrative purposes only and the lengths of the first and second portions may be different from one another. For example, the first portion may be longer than the second portion or vice versa. In addition, the rotor 20 may comprise more than two helical track portions, each helical track portion of the rotor 20 having helical tracks extending in a direction different from the direction of the helical tracks of the adjacent helical track portions of the rotor 20. Each helical track comprises teeth 24 attached thereto, as described in greater detail below.

In alternative embodiments, different numbers of helical tracks may be provided in each of the different helical track portions (e.g. between 1 and 10 helical tracks per helical track portion).

Furthermore, the helical tracks 26 may extend in different directions from those of the present embodiment. In other embodiments the helical tracks in the first helical track portion may extend in a clockwise direction about the horizontal axis from the central portion towards the first end of the rotor, whilst the helical tracks in the second helical track portion may extend in an anticlockwise direction about the horizontal axis from the central portion towards the second end of the rotor.

In a further embodiment, the rotor comprises first and second helical track portions at first and second ends, with a third track portion having non-helical tracks provided therebetween. Such non-helical tracks may be arranged along the surface of the rotor substantially parallel to the axis.

In the present illustrative embodiments, the tracks 26a, 26b are depicted as a continuous stepped structure upstanding from the surface of the rotor 20.

However, the helical tracks 26 are not required to be continuous structures and, in other embodiments, may comprise a series of discrete brackets or posts to which the teeth 24 are attached. In other embodiments, the helical track 26 may comprise a slot(s) machined/etched into the surface of the rotor, into which the teeth 24 may be attached by insertment and being locked in place. In other examples, the teeth 24 may be permanently attached e.g. by welding.

It is advantageous that the teeth 24 are removably attached to the helical tracks 26, so that the teeth 24 may be replaced or refurbished when worn or damaged in use or so that the rotor 20 may be reconfigured for different operations (e.g. scarification).

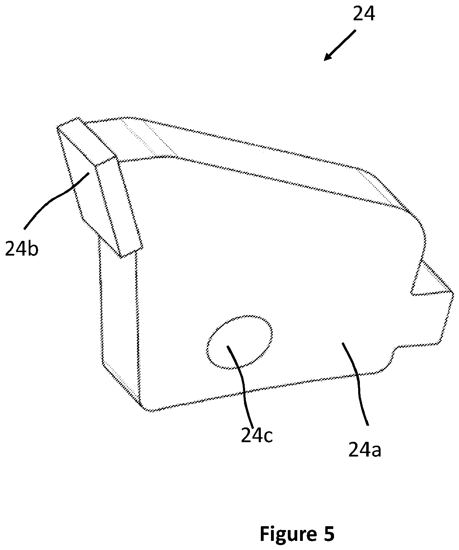

Figure 5 shows an illustrative example of a tooth 24, which is generally trapezoidal in shape. However, the claims are not limited in this respect, and any shape tooth may be used.

The tooth 24 comprises a body portion 24 formed of wear resistant material such as steel, and, in embodiments, comprises a steel tip portion 24b comprising wear resistant material, such as tungsten carbide. The tip portion 24b is arranged to be a height above the surface of the rotor 20 when attached to the track (e.g. from 10mm up to 200mm above the surface, and preferably, at least 60mm above the surface).

The width of a tooth may be between 1mm - 30mm, and preferably, the width of a tooth 24 is between 5-15mm, and more preferably, the width of a tooth 24 is 10mm.

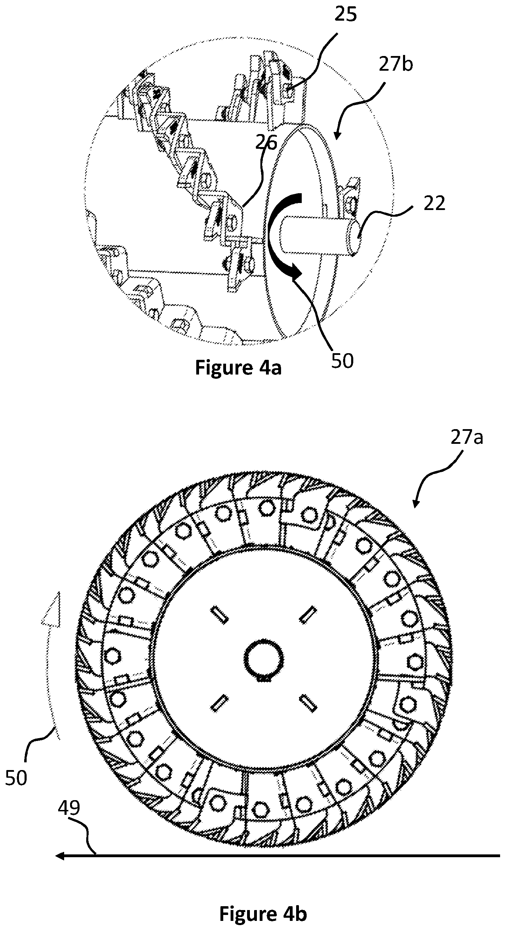

For example, and as depicted in Figure 4a which shows an enlarged view of the second end 27b (as circled in Figure 3), the teeth 24 may be bolted to the helical track 26 with a single bolt 25 through aperture 24c, although any number of bolts may be used. Furthermore, the claims are not limited to bolting the teeth in place, and in other embodiments the teeth 24 may be fixed directly onto the rotor 20, or into slots in the rotor 20 surface.

In an example operation, with teeth 24 closely spaced along all helical tracks 26 to provide substantially full coverage across the rotor 20, the rotor 20 will be capable of removing in one pass all or substantially all thatch, grass and infected humus and or sand. It will be noted that the claims are not limited to the helical tracks terminating at the first end 27a and/or second end 27b of the rotor, but the helical tracks may terminate a distance therefrom e.g. up to 30cm or more therefrom.

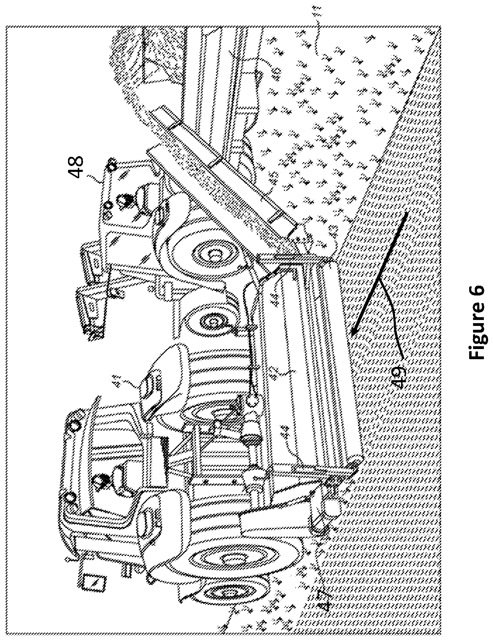

Referring to Figure 6, the apparatus may, in use, be mounted in equipment comprising a chassis 42, and drawn over the turf 11 by a tractor 41 (the rotor is not shown in Figure 6).

In the present illustrative example, the chassis 42 has a ground roller 43 and a height control arrangement 44 adapted to control the height of the rotor 20 relative to the turf so as to deploy the teeth 24 as required e.g. below turf level 14 or to skim the surface of the turf.

The tractor 41 is driven to traverse the rotor over the turf 11 in the direction 49 as also shown in Figures 4b, which is an end view of the first end 27a. The rotor is rotated in the direction 50 as shown in Figure 4b as it traverses the turf in the direction of travel 49, so that the teeth 24 move through the turf 11 lifting material such as thatch, natural grass, blades, stalks and/or matrix material. Such rotation of the rotor in the direction 50 may be provided using a power take-off transmission 45 on the tractor 41.

The material lifted from the turf is pulled inwards from the respective ends 27a/27b by the action of the helically disposed teeth 24 and is transferred onto a conveyor belt 47 in the chassis 42 as the rotor 20 is rotated in the direction 50. When the helical tracks are formed as continuous structures as in Figures 2-4b, any material falling from a particular tooth will be caught by the helical track to which it is attached before being transferred onto the conveyor belt from the helical track. Such functionality may also be provided when the helical tracks are not formed as continuous structures, whereby the teeth may be attached to each other such that no gaps exist therebetween, or whereby any posts or brackets may be provided with features to catch any material falling of the teeth. Without being limited to theory, the action of pulling the lifted material inwards may be seen as an Archimedean screw action due to the direction of the helically tracks.

The conveyor belt 47 carries the lifted material onto elevator 45 into a trailer 46 drawn behind a second tractor 48.

Pulling the material inwards from the respective ends 27a/27b before being lifted onto the conveyer belt 47 means that "witness lines" on the treated turf will be reduced, whereby a person skilled in the art will appreciate that witness lines comprise a visible line of remnant material that is not collected by the rotor.

As shown, the rotor height control arrangement is used to set the height of the rotor relative to the turf. The height control arrangement 44 is adjustable either continuously, or in fine steps (e.g. 1mm or less, preferably 0.1mm or less, and even further preferably 0.01mm or less). For example, a geared arrangement with an input wheel effecting an adjustment of 0.1mm per rotation allows for finer than 0.1mm adjustment by a fractional turn. Such a degree of adjustability is highly advantageous, allowing for setting of the rotor height dependent on the requirements. A height control arrangement with a digital readout is also useful, and may be calibrated to indicate what the height of the rotor is. The skilled person will recognise that, for best performance, the height setting does not drift during use.

A typical rotational speed for such a rotor may be between 600-1400rpm, and more preferably is approximately 1000rpm, although the claims are not limited in this respect.

Thus equipment using a rotor of width > 0.5m may thus treat a football or like sized field on a single pass, or two passes at most, an operation comfortably accommodated within a single day's work.

With reference to Figures 1a and 1b, treatment to a depth d at which at least some natural grass, roots, crowns, rhizomes, perhaps some culm, is left in the matrix 15/15a will suffice, and the grass will grow back. However, when the matrix is badly infected with algae, all the natural grass may be removed by driving the teeth sufficiently deep, and new matrix laid down and reseeded.

Furthermore, when treating reinforced turf as in Figure 1b, the depth d is less than the depth of any mat or backing such as disclosed, for example, in US5489317 or US6094860.

Similarly, with the Desso Grassmaster^{®} or SISGrass systems, which do not have a backing, the depth d should be less than the depth D to which the artificial fibres are injected, so that any artificial fibres will remain in place.

Furthermore still, when treating stoloniferous, warm season turf, as in Figure 1c, the depth d is such that the teeth skim the top surface of the matrix 150, and, preferably such that the teeth are above the stolons 190 in the upper layer 120, such that the stolons 190, and any artificial fibres (if present) will remain in place after treatment.

The rotor 20 may be reconfigured by removing teeth from one or more of the helical tracks of the one or more helical potion 25a or 25b, so as to leave the rotor balanced - and deployed, using the height control, so that the teeth penetrate to a lesser depth, such that the rotor 20 functions as a scarifier.

While preferred embodiments of the invention have been described, it will be readily understood by those skilled in the art that variations may be made thereto without departing from the scope of the invention. For instance, and as described above, other configurations (e.g. numbers/directions) of helical track portions or helical tracks may be provided.

## Claims

1. A turf treatment apparatus (10), comprising:
a cylindrical rotor (20), rotatable about an axis (22), the rotor (20) having:
a first helical track portion (25a) having a first helical track (26a) extending about the axis (22) in a first direction from a first end (27a) of the rotor towards a central portion of the rotor (20), wherein the first direction comprises an anticlockwise direction;
a second helical track portion (25b) having a second helical track (26b) extending about the axis (22) in a second direction between a second end (27b) of the rotor and the central portion of the rotor (20), wherein the second direction comprises a clockwise direction;
wherein each helical track portion (25a, 25b) comprises between 2 and 10 helical tracks (26a, 26b), each helical track having a plurality of teeth (24) arranged therealong;
wherein the teeth (24) are closely spaced along the helical tracks (26) to provide substantially full coverage across the rotor (20) such that the rotor (20) is capable of removing in one pass substantially all thatch, grass, infected humus and or sand.

2. The apparatus according to claim 1, wherein each helical track portion comprises four helical tracks.

3. The apparatus according to claim 1 or claim 2, wherein each helical track comprises a substantially continuous structure upstanding from the surface of the rotor.

4. The apparatus according to any of claims 1 to 3, wherein each helical track comprises a series of discrete brackets or posts.

5. The apparatus according to any of claims 1 to 3, wherein each helical track comprises a slot in the surface of the rotor into which a tooth is inserted.

6. The apparatus according to any preceding claim, wherein the length of the first helical track portion is equal to the length of the second helical track portion.

7. The apparatus according to any of claims 1 to 5, wherein the length of the first helical track portion is not equal to the length of the second helical track portion.

8. Turf treatment equipment, the equipment comprising a chassis (42) and mounted therein the apparatus (10) of any of claims 1 to 7, wherein the equipment is configured so that the cylindrical rotor (20) traverses over the turf and rotates relative to the turf (11), so as to lift material therefrom.

9. Equipment according to claim 8, comprising a height control arrangement adapted to control the height of the rotor relative to the turf.

10. Equipment according to any of claims 8 or 9, the equipment comprising a conveyer belt to remove the lifted material therefrom.

11. A method for the treatment of turf (11) comprising grass growing in a matrix, the method comprising: removing thatch or other infestation using an apparatus (10) as claimed in any of claims 1 to 7.

## Patentansprüche

1. Rasenbehandlungsvorrichtung (10), umfassend:
einen zylindrischen Rotor (20), der um eine Achse (22) drehbar ist, wobei der Rotor (20) aufweist:
einen ersten schraubenförmigen Spurabschnitt (25a) mit einer ersten schraubenförmigen Spur (26a), die sich um die Achse (22) in einer ersten Richtung von einem ersten Ende (27a) des Rotors zu einem mittleren Abschnitt des Rotors (20) erstreckt, wobei die erste Richtung eine Richtung gegen den Uhrzeigersinn umfasst;
einen zweiten schraubenförmigen Spurabschnitt (25b) mit einer zweiten schraubenförmigen Spur (26b), die sich um die Achse (22) in einer zweiten Richtung zwischen einem zweiten Ende (27b) des Rotors und dem mittleren Abschnitt des Rotors (20) erstreckt, wobei die zweite Richtung eine Richtung im Uhrzeigersinn umfasst;
wobei jeder schraubenförmige Spurabschnitt (25a, 25b) zwischen 2 und 10 schraubenförmige Spuren (26a, 26b) umfasst, wobei jede schraubenförmige Spur eine Vielzahl von daran entlang angeordneten Zähnen (24) aufweist;
wobei die Zähne (24) entlang der schraubenförmigen Spuren (26) dicht beieinander liegen, um eine im Wesentlichen vollständige Abdeckung über den Rotor (20) so bereitzustellen, dass der Rotor (20) in der Lage ist, in einem Durchgang im Wesentlichen sämtlichen Rasenfilz, Gras, verseuchten Humus und oder Sand zu entfernen.

2. Vorrichtung nach Anspruch 1, wobei jeder schraubenförmige Spurabschnitt vier schraubenförmige Spuren umfasst.

3. Vorrichtung nach Anspruch 1 oder Anspruch 2, wobei jede schraubenförmige Spur eine im Wesentlichen durchgehende Struktur umfasst, die von der Oberfläche des Rotors nach oben steht.

4. Vorrichtung nach einem der Ansprüche 1 bis 3, wobei jede schraubenförmige Spur eine Reihe einzelner Klammern oder Stützen umfasst.

5. Vorrichtung nach einem der Ansprüche 1 bis 3, wobei jede schraubenförmige Spur einen Schlitz in der Oberfläche des Rotors umfasst, in den ein Zahn eingesetzt ist.

6. Vorrichtung nach einem der vorhergehenden Ansprüche, wobei die Länge des ersten schraubenförmigen Spurabschnitts gleich der Länge des zweiten schraubenförmigen Spurabschnitts ist.

7. Vorrichtung nach einem der Ansprüche 1 bis 5, wobei die Länge des ersten schraubenförmigen Spurabschnitts nicht gleich der Länge des zweiten schraubenförmigen Spurabschnitts ist.

8. Rasenbehandlungsausrüstung, wobei die Ausrüstung ein Fahrgestell (42) und darin montiert die Vorrichtung (10) nach einem der Ansprüche 1 bis 7 umfasst, wobei die Ausrüstung so konfiguriert ist, dass der zylindrische Rotor (20) den Rasen überquert und sich relativ zum Rasen (11) dreht, um Material davon anzuheben.

9. Ausrüstung nach Anspruch 8, umfassend eine Höhensteuerungsanordnung, die angepasst ist, um die Höhe des Rotors relativ zum Rasen zu steuern.

10. Ausrüstung nach einem der Ansprüche 8 oder 9, wobei die Ausrüstung ein Förderband umfasst, um das angehobene Material davon zu entfernen.

11. Verfahren zur Behandlung von Rasen (11), der Gras umfasst, das in einer Matrix wächst, wobei das Verfahren umfasst: Entfernen von Rasenfilz oder anderem Befall unter Verwendung einer Vorrichtung (10) nach einem der Ansprüche 1 bis 7.

## Revendications

1. Appareil de traitement de gazon (10), comprenant :
un rotor cylindrique (20), pouvant tourner autour d'un axe (22), le rotor (20) possédant :
une première partie de piste hélicoïdale (25a) comportant une première piste hélicoïdale (26a) s'étendant autour de l'axe (22) dans un premier sens à partir d'une première extrémité (27a) du rotor vers une partie centrale du rotor (20), ledit premier sens comprenant un sens antihoraire ;
une seconde partie de piste hélicoïdale (25b) comportant une seconde piste hélicoïdale (26b) s'étendant autour de l'axe (22) dans un second sens entre une seconde extrémité (27b) du rotor et
la partie centrale du rotor (20), ledit second sens comprenant un sens horaire ;
chaque partie de piste hélicoïdale (25a, 25b) comprenant entre 2 et 10 pistes hélicoïdales (26a, 26b), chaque piste hélicoïdale possédant une pluralité de dents (24) agencées le long de celle-ci ;
lesdites dents (24) étant étroitement espacées le long des pistes hélicoïdales (26) pour fournir une couverture sensiblement complète à travers le rotor (20) de sorte que le rotor (20) soit capable de retirer en un seul passage sensiblement tout le chaume, l'herbe, l'humus infecté et ou du sable.

2. Appareil selon la revendication 1, chaque partie de piste hélicoïdale comprenant quatre pistes hélicoïdales.

3. Appareil selon la revendication 1 ou la revendication 2, chaque piste hélicoïdale comprenant une structure sensiblement continue se dressant à partir de la surface du rotor.

4. Appareil selon l'une quelconque des revendications 1 à 3, chaque piste hélicoïdale comprenant une série de supports ou montants distincts.

5. Appareil selon l'une quelconque des revendications 1 à 3, chaque piste hélicoïdale comprenant une fente dans la surface du rotor dans laquelle une dent est insérée.

6. Appareil selon une quelconque revendication précédente, ladite longueur de la première partie de piste hélicoïdale étant égale à la longueur de la seconde partie de piste hélicoïdale.

7. Appareil selon l'une quelconque des revendications 1 à 5, ladite longueur de la première partie de piste hélicoïdale n'étant pas égale à la longueur de la seconde partie de piste hélicoïdale.

8. Equipement de traitement de gazon, l'équipement comprenant un châssis (42) et étant monté dans celui-ci, l'appareil (10) selon l'une quelconque des revendications 1 à 7, ledit équipement étant conçu afin que le rotor cylindrique (20) traverse le gazon et tourne par rapport au gazon (11), de façon à soulever des matériaux de celui-ci.

9. Equipement selon la revendication 8, comprenant un agencement de commande de hauteur adapté pour commander la hauteur du rotor par rapport au gazon.

10. Equipement selon l'une quelconque des revendications 8 ou 9, l'équipement comprenant une bande transporteuse pour retirer le matériau soulevé de celui-ci.

11. Procédé permettant le traitement de gazon (11) comprenant de l'herbe poussant dans une matrice, le procédé comprenant : le retrait du chaume ou d'une autre infestation à l'aide d'un appareil (10) selon l'une quelconque des revendications 1 à 7.
